# DEMANDE DE BREVET EUROPEEN

(11) **EP 4 693 860 A1**
(43) Date de publication de la demande: **11.02.2026**
(21) Numéro de dépôt: 25191590.6
(22) Date de dépôt: 24.07.2025
(51) Int. Cl.: H02M 1/32, H02H 1/00, H02M 7/5387

(54) **DÉTECTION D ARC ÉLECTRIQUE SÉRIE DANS UN CONVERTISSEUR DE PUISSANCE DC/AC**

(30) Priorité: 08.08.2024 FR 2408802
(71) Demandeur: Safran Electrical & Power, 31702 Blagnac (FR)
(72) Inventeur: GUILLARD, Eric, 77550 MOISSY-CRAMAYEL (FR)
(74) Mandataire: Cabinet Boettcher

(57) **Abrégé**

Dispositif d'alimentation (23) comprenant :
- un convertisseur de puissance DC/AC (24) agencé pour produire au moins une tension alternative de sortie (Va) à partir d'une tension continue d'entrée (Ve) ;
- un circuit de surveillance (35) comportant :
∘ un convertisseur AC/DC (36) agencé pour produire une tension de surveillance (Vsur) à partir de la au moins une tension alternative de sortie ;
∘ un circuit de détection (37) agencé pour détecter une survenue d'un arc électrique série dans le convertisseur de puissance DC/AC à partir de la tension de surveillance.

## Description

L'invention concerne le domaine de la surveillance des convertisseurs de puissance DC/AC.

### ARRIERE PLAN

Le changement climatique est une préoccupation majeure pour de nombreux organes législatifs et de régulation à travers le monde. En effet, diverses restrictions sur les émissions de carbone ont été, sont ou seront adoptées par divers états. En particulier, une norme ambitieuse s'applique à la fois aux nouveaux types d'avions mais aussi à ceux en circulation nécessitant de devoir mettre en œuvre des solutions technologiques afin de les rendre conformes aux réglementations en vigueur. L'aviation civile se mobilise depuis maintenant plusieurs années pour apporter une contribution à la lutte contre le changement climatique. Les efforts de recherche technologique ont déjà permis d'améliorer de manière très significative les performances environnementales des avions. La Déposante prend en considération les facteurs impactant dans toutes les phases de conception et de développement pour obtenir des composants et des produits aéronautiques moins énergivores, plus respectueux de l'environnement et dont l'intégration et l'utilisation dans l'aviation civile ont des conséquences environnementales modérées dans un but d'amélioration de l'efficacité énergétique des avions. Par voie de conséquence, la Déposante travaille en permanence à la réduction de son incidence climatique négative par l'emploi de méthodes et l'exploitation de procédés de développement et de fabrication vertueux et minimisant les émissions de gaz à effet de serre au minimum possible pour réduire de l'empreinte environnementale de son activité. Ces travaux de recherche et de développement soutenus portent à la fois sur les nouvelles générations de moteurs d'avions, l'allègement des appareils, notamment par les matériaux employés et les équipements embarqués allégés, le développement de l'emploi des technologies électriques pour assurer la propulsion, et, indispensables compléments aux progrès technologiques, les biocarburants aéronautiques.

De plus en plus d'avionneurs proposent ainsi des architectures pour des aéronefs à propulsion électrique ou à propulsion hybride-électrique. En effet, ces architectures semblent prometteuses pour réduire le bilan carbone des aéronefs, en particulier sur des avions de type « *commuter* » ou régional, de faible capacité de transport (typiquement inférieure à 30 passagers).

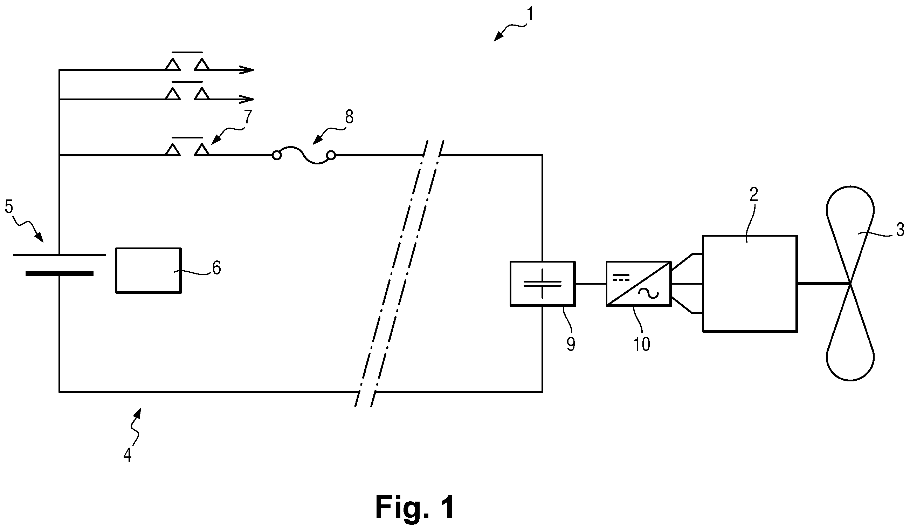

En référence à la figure 1, le système de propulsion 1 d'un aéronef à propulsion électrique ou à propulsion hybride-électrique comporte classiquement une pluralité de moteurs électriques 2 qui entraînent chacun en rotation une hélice 3.

La chaîne d'alimentation 4 des moteurs 2 comporte un dispositif de stockage de l'énergie, comprenant des batteries 5 et un BMS 6 (pour *Batterie Management System*) destiné à la gestion de la charge et décharge des cellules des batteries 5.

La chaîne d'alimentation 4 comporte de plus, pour chaque moteur électrique 2 :
- un dispositif de distribution, comprenant par exemple un contacteur 7 permettant de couper ou de laisser passer le courant électrique vers le moteur 2 ;
- un dispositif de protection 8, par exemple de type I2t ;
- un étage de filtrage (par exemple un condensateur ou bien un dispositif « DC-link ») 9 ;
- un convertisseur de puissance DC/AC 10 (DC pour *Direct Current,* ou courant continu, et AC pour *Alternative Current,* ou courant alternatif). Le convertisseur de puissance DC/AC 10 est généralement triphasé (comme le moteur 2).

Il est possible d'avoir des cas de panne d'arc électrique série au niveau du convertisseur de puissance DC/AC 10.

Les arcs électriques série peuvent se produire à plusieurs niveaux entre le convertisseur de puissance DC/AC 10 et le moteur électrique 2.

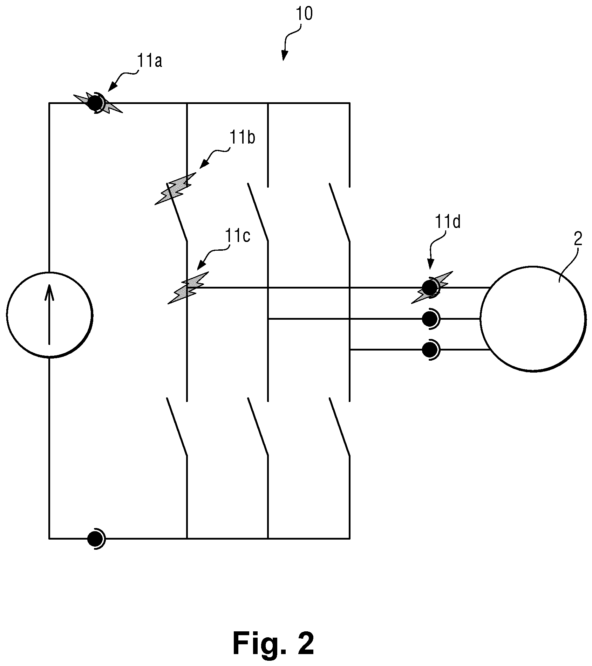

En référence à la figure 2, on voit que :
- un arc électrique série 11a peut survenir à l'interface d'entrée du convertisseur de puissance DC/AC 10 ;
- un arc électrique série 11b peut survenir dans un élément de commutation du convertisseur ;
- un arc électrique série 11c peut survenir entre l'élément de commutation et l'interface de sortie du convertisseur 10 ;
- un arc électrique série 11d peut survenir au niveau de l'interface de sortie du convertisseur 10.

Ces modes de panne sont difficilement identifiables en fonctionnement et peuvent mener à un départ de feu qui est extrêmement préjudiciable à la sureté de fonctionnement de l'aéronef.

On connaît des méthodes qui permettent de détecter la survenue d'un arc électrique série dans un circuit.

Ainsi, le document FR3102892A1 décrit un procédé permettant de détecter un arc électrique dans un réseau électrique. Le procédé utilise la réflectométrie. Cependant, cette méthode est peu efficace dans le cas d'un convertisseur de puissance, car les composants du convertisseur empêchent l'onde injectée de se propager.

Le document FR3133452A1, quant à lui, décrit une méthode qui utilise un réseau de Bragg. Cette méthode nécessite d'adapter le dispositif d'alimentation surveillé. Elle ne peut pas être mise en œuvre sur un dispositif d'alimentation préexistant, ce qui nécessite donc de redévelopper et requalifier le dispositif d'alimentation. Or, ces développements et activités de qualification sont encadrés par un certain nombre de normes, notamment par les normes D0-254 (pour le *hardware*) et DO-178 (pour le *software*), et sont complexes et coûteux.

Par ailleurs, cette méthode requiert d'instrumenter le dispositif d'alimentation surveillé avec un nombre relativement élevé de composants d'instrumentation, et présente donc un impact important en matière d'encombrement et de masse.

### OBJET

L'invention a pour objet un moyen de détecter la survenue d'un arc électrique série dans un convertisseur de puissance DC/AC, qui soit efficace, simple, peu coûteux, peu encombrant, et qui puisse être utilisé pour surveiller un dispositif d'alimentation préexistant.

### RESUME

En vue de la réalisation de ce but, on propose un dispositif d'alimentation agencé pour alimenter électriquement une charge et comprenant :
- un convertisseur de puissance DC/AC agencé pour produire au moins une tension alternative de sortie à partir d'une tension continue d'entrée, la au moins une tension alternative de sortie étant destinée à être appliquée entre des bornes de la charge ;
- un circuit de surveillance comportant :
   ∘ un convertisseur AC/DC agencé pour produire une tension de surveillance à partir de la au moins une tension alternative de sortie ;
   ∘ un circuit de détection agencé pour détecter une survenue d'un arc électrique série dans le convertisseur de puissance DC/AC à partir de la tension de surveillance.

Le circuit de surveillance permet de détecter la survenue d'un arc électrique série dans un convertisseur de puissance DC/AC de manière très efficace. En effet, un arc électrique série génère une chute de tension au niveau de la tension alternative de sortie concernée du convertisseur de puissance DC/AC, qui est détectée de manière fiable et précise par le convertisseur AC/DC. Le circuit de surveillance peut être mis en œuvre avec un convertisseur de puissance DC/AC préexistant, sans nécessiter de modification de celui-ci. Le circuit de surveillance utilise des composants simples et peu nombreux, et présente un encombrement et une masse réduits. Il est en outre relativement simple à concevoir et à qualifier.

L'invention sera mieux comprise à la lumière de la description qui suit d'un mode de mise en œuvre particulier non limitatif de l'invention.

### BREVE DESCRIPTION DES DESSINS

Il sera fait référence aux dessins annexés parmi lesquels :
[Fig. 1] la figure 1 représente une chaîne d'alimentation d'un système de propulsion d'aéronef ;
[Fig. 2] la figure 2 représente un convertisseur de puissance DC/AC et les endroits où peut survenir un arc électrique série ;
[Fig. 3] la figure 3 représente un convertisseur de puissance DC/AC, et le convertisseur AC/DC du circuit de surveillance ;
[Fig. 4] la figure 4 représente le convertisseur de puissance DC/AC ;
[Fig. 5] la figure 5 représente un graphique comprenant des courbes de la tension d'arc en fonction de la longueur d'arc, pour un câble en cuivre et pour un câble en aluminium ;
[Fig. 6] la figure 6 représente un graphique comprenant la forme d'onde en sortie du convertisseur AC/DC en l'absence de défaut d'arc électrique série dans le convertisseur de puissance DC/AC ;
[Fig. 7] la figure 7 est une figure similaire à la figure 6, en présence d'un défaut d'arc électrique série dans le convertisseur de puissance DC/AC ;
[Fig. 8] la figure 8 représente le convertisseur de puissance DC/AC et le circuit de surveillance ;
[Fig. 9] la figure 9 est une figure semblable à la figure 8, un peu plus détaillée ;
[Fig. 10] la figure 10 représente deux graphiques, l'un représentant la sortie du circuit de détection en présence d'un arc électrique série dans le convertisseur de puissance DC/AC, et l'autre représentant la sortie du circuit de détection en l'absence dudit défaut.

### DESCRIPTION DETAILLEE

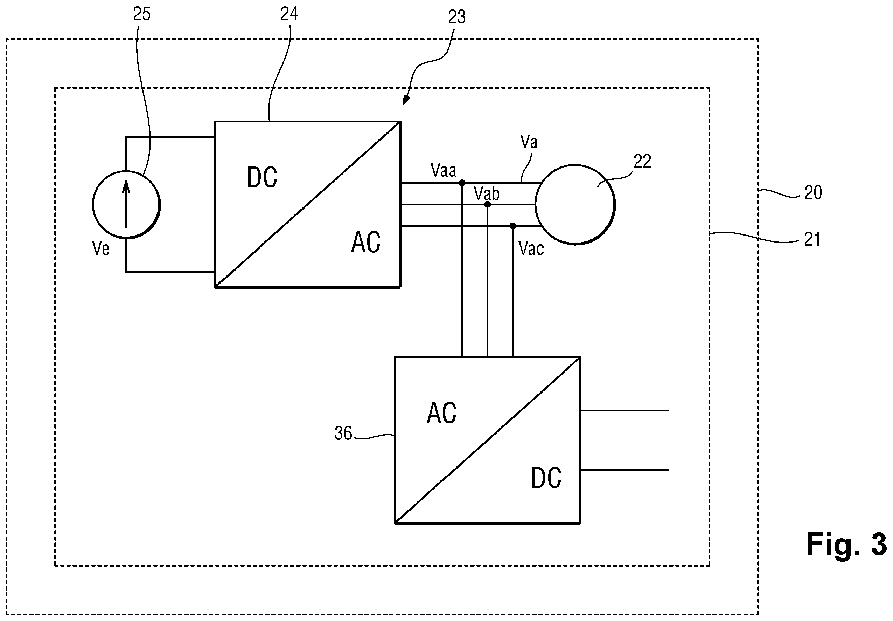

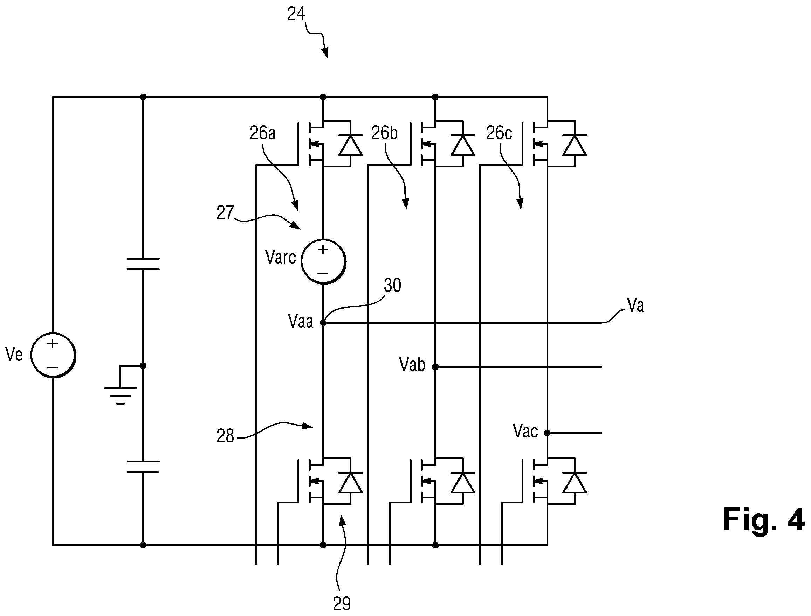

En référence aux figures 3 et 4, un aéronef 20 comporte un système électrique de propulsion 21 qui comprend une pluralité de moteurs électriques 22 et, pour chaque moteur 22, un dispositif d'alimentation 23. Le dispositif d'alimentation 23 comprend un convertisseur de puissance DC/AC 24 et une source d'alimentation 25. La source d'alimentation 25 produit une tension continue d'entrée Ve. Le dispositif d'alimentation 23 alimente électriquement le moteur électrique 22.

Le convertisseur de puissance DC/AC 24 produit au moins une tension alternative de sortie à partir de la tension continue d'entrée Ve, la au moins une tension alternative de sortie étant destinée à être appliquée entre les bornes du moteur 22.

Le convertisseur de puissance DC/AC 24 est ici un convertisseur triphasé, tout comme le moteur électrique 22. Le convertisseur de puissance DC/AC 24 produit donc trois tensions alternatives de sortie Vaa, Vab, Vac, une pour chaque phase du moteur 22.

Le convertisseur de puissance DC/AC 24 est un onduleur qui comprend trois branches 26a, 26b, 26c comprenant chacune un bras d'onduleur supérieur 27 et un bras d'onduleur inférieur 28. Chaque bras comprend un élément de commutation, et chaque branche comprend donc deux éléments de commutation. Les éléments de commutation sont par exemple des transistors MOSFET 29. Dans chaque branche 26a, 26b, 26c, le drain du transistor 29 du bras supérieur 27 est connecté à la borne positive de la source d'alimentation 25, la source du transistor 29 du bras inférieur 28 est connectée à la borne négative de la source d'alimentation 25, et la source du transistor 29 du bras supérieur 27 est connectée au drain du transistor 29 du bras inférieur 28.

L'onduleur 24 génère donc une tension alternative de sortie Va (Va = Vaa, Vab ou Vac) sur chaque point milieu 30 de chaque branche, ledit point milieu 30 étant connecté à la source du transistor du bras supérieur 27 et au drain du transistor du bras inférieur 28 de ladite branche. Le pilotage des transistors utilise ici la technique MLI (pour Modulation de Largeur d'Impulsions, ou PWM, pour *Pulse Width Modulation) .*

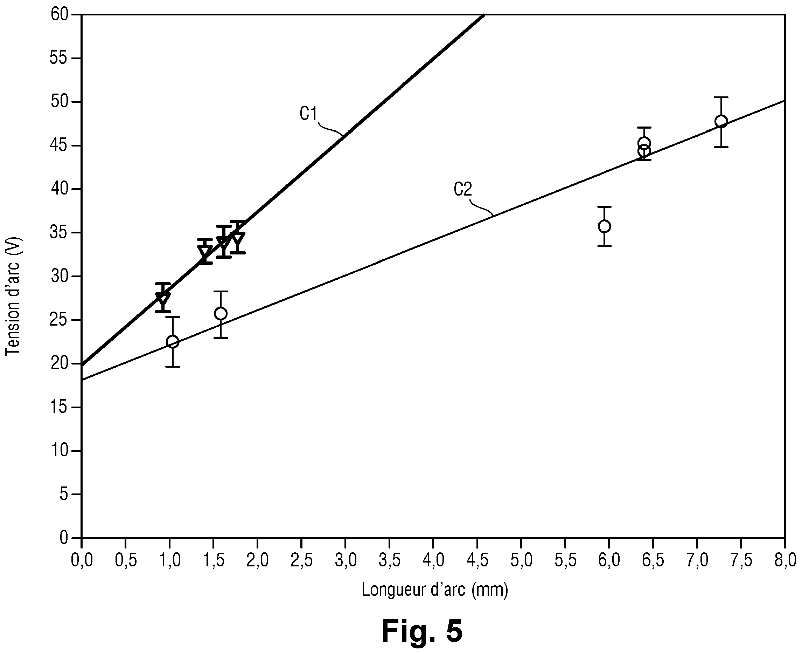

En référence à la figure 5, lorsqu'un arc électrique série survient, il provoque une chute de tension qui dépend notamment de la longueur d'arc et du matériau du conducteur sur lequel l'arc se produit.

La courbe C1 correspond à un conducteur en aluminium et la courbe C2 correspond à un conducteur en cuivre.

La chute de tension, ou « tension d'arc », s'assimile à une force contre-électromotrice. La valeur de cette force contre-électromotrice est typiquement supérieure à 17Vdc.

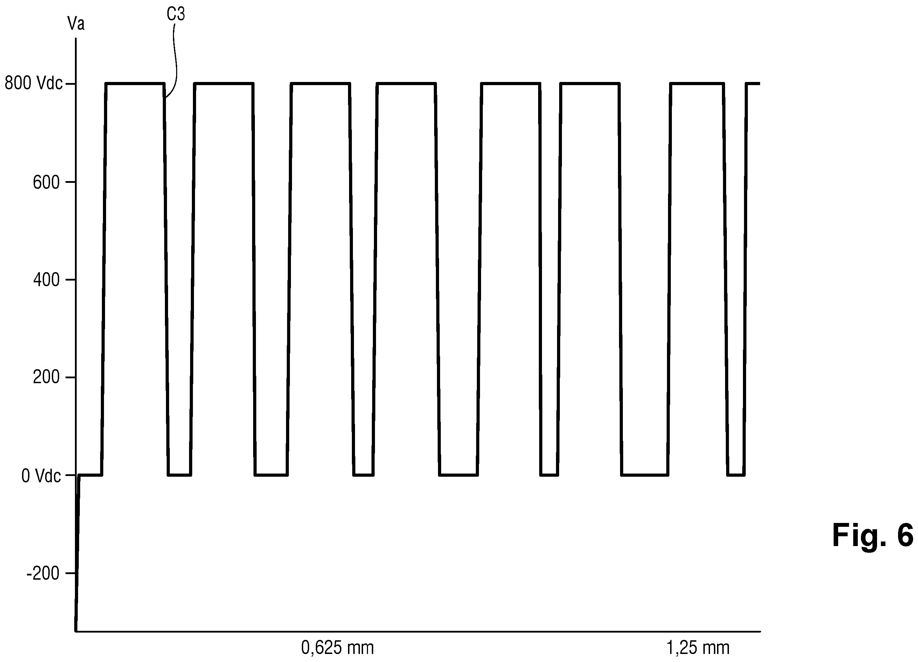

En référence à la figure 6, la tension alternative de sortie Va de chaque branche de l'onduleur a normalement, en l'absence de défaut d'arc électrique série, une forme d'onde semblable à la courbe C3. La forme d'onde de la tension varie entre un niveau bas de 0Vdc et un niveau haut, dans l'exemple de 800Vdc, qui correspond à la tension continue d'entrée Ve.

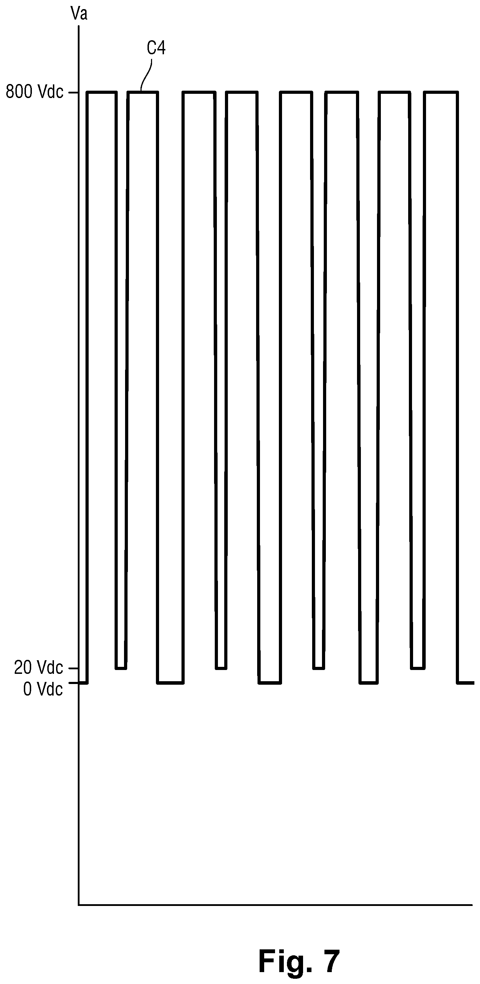

En référence à nouveau à la figure 4, un arc électrique série présent dans le bras d'onduleur supérieur 27 de la branche 26a peut être modélisé par une tension continue Varc égale ici par exemple à 20Vdc. La forme d'onde de la tension alternative de sortie Vaa de la branche 26a présente alors une forme semblable à la courbe C4 visible sur la figure 7. La tension Vaa évolue entre un niveau bas de 0Vdc et un niveau haut de 800Vdc, puis entre un niveau bas de 20Vdc et un niveau haut de 800Vdc, puis à nouveau entre un niveau bas de 0Vdc et un niveau haut de 800Vdc, etc.

Une même forme d'onde est observée lorsque l'arc électrique série est présent dans un bras inférieur 28.

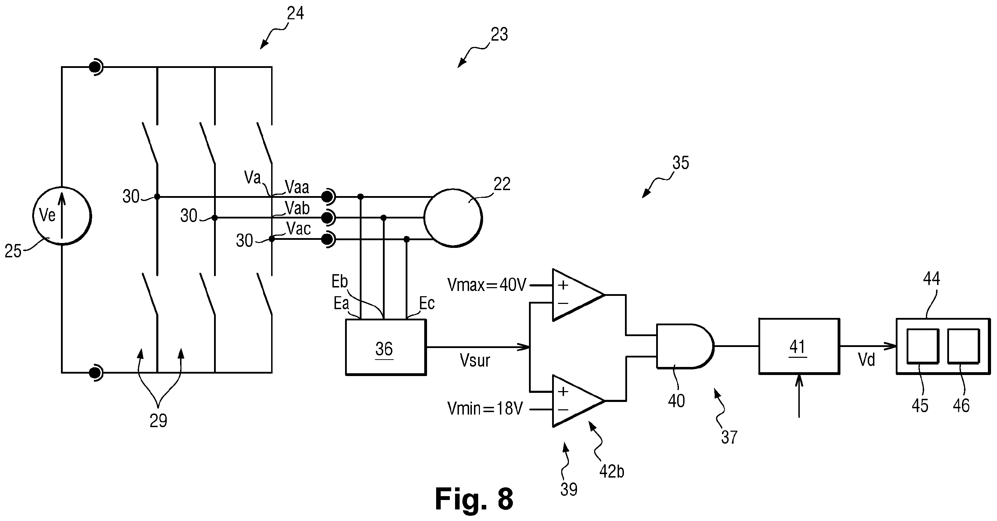

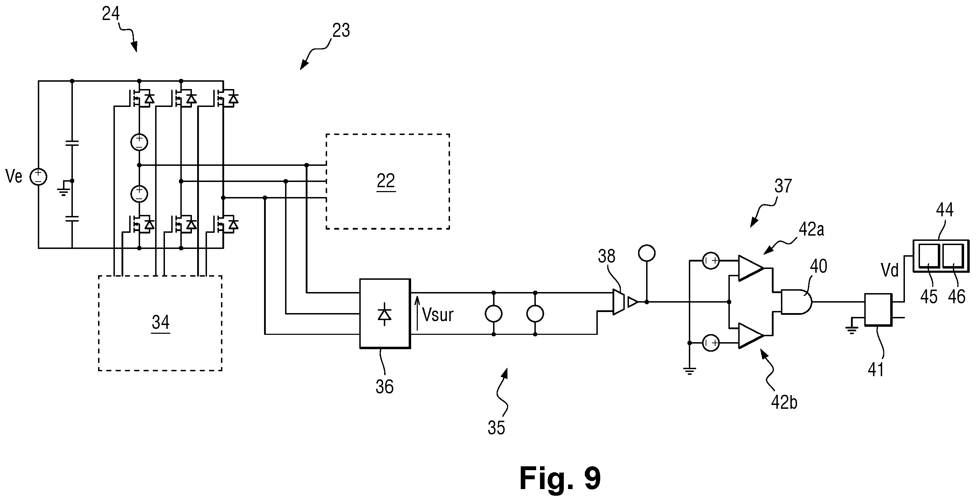

En référence aux figures 8 et 9, le dispositif d'alimentation 23 comprend donc un circuit de surveillance 35 dont le rôle est de détecter la survenue d'un arc électrique série dans le convertisseur de puissance DC/AC 24. On a représenté schématiquement sur la figure 9 le module de commande MLI 34 du convertisseur de puissance DC/AC 24.

Le circuit de surveillance 35 vise à détecter la présence d'une tension au niveau de l'un des points milieux 30 du convertisseur de puissance DC/AC 24, qui est comprise entre un seuil de tension minimum Vmin (tension d'arc minimum) et un seuil de tension maximum Vmax (tension d'arc maximum), et qui est donc significative de la survenue d'un défaut d'arc série.

La tension d'arc minimum est par exemple égale à 12Vdc et la tension d'arc maximum est par exemple égale à 40Vdc.

Le circuit de surveillance 35 comporte un convertisseur AC/DC 36 et un circuit de détection 37.

Le convertisseur AC/DC 36 est ici un redresseur double alternance triphasé (ici à diodes), qui comprend une entrée Ea connectée au point milieu 30 de la branche 26a, une entrée Eb connectée au point milieu 30 de la branche 26b, et une entrée Ec connectée au point milieu 30 de la branche 26c.

La tension alternative de sortie Vaa du convertisseur DC/AC 36 est donc appliquée sur l'entrée Ea, la tension alternative de sortie Vab est appliquée sur l'entrée Eb, et la tension alternative de sortie Vac est appliquée sur l'entrée Ec du convertisseur AC/DC 36.

Le convertisseur AC/DC 36 produit donc sur sa sortie une tension de surveillance Vsur à partir de la au moins une tension alternative de sortie Va, ici à partir des trois tensions alternatives de sortie Vaa, Vab, Vac.

La tension Vsur a la même forme que chaque tension Va. En l'absence d'arc série, la tension de surveillance Vsur a donc la même forme que la tension alternative de sortie Va visible sur la figure 6. En présence d'un arc série, la tension de surveillance Vsur a donc la même forme que la tension alternative de sortie Vaa visible sur la figure 7.

Le circuit de détection 37 détecte la survenue d'un arc électrique série dans le convertisseur de puissance DC/AC 24 à partir de la tension de surveillance Vsur.

Le circuit de détection 37 comprend un transformateur d'isolement 38 (non représenté sur la figure 8), un comparateur à deux seuils 39, et un circuit logique comprenant au moins une porte « ET » 40 et une bascule « RS » 41.

Le transformateur d'isolement 38 comprend une entrée positive et une entrée négative, respectivement connectées à une sortie positive et une sortie négative du convertisseur AC/DC 36. La tension de surveillance Vsur est donc appliquée en entrée du transformateur d'isolement 38, et reproduite en sortie du transformateur d'isolement 38.

Le comparateur à deux seuils 39 comprend un premier amplificateur opérationnel 42a formant un premier comparateur, et un deuxième amplificateur opérationnel 42b formant un deuxième comparateur.

Le premier comparateur 42a compare la tension de surveillance Vsur avec le seuil de tension maximum. Le deuxième comparateur 42b compare la tension de surveillance avec le seuil de tension minimum qui est inférieur au seuil de tension maximum.

La tension d'arc maximum Vmax (seuil de tension maximum) est appliquée sur l'entrée non inverseuse du premier amplificateur opérationnel 42a. La sortie du transformateur d'isolement 38, et donc la tension de surveillance Vsur, est appliquée sur l'entrée inverseuse du premier amplificateur opérationnel 42a.

La tension d'arc minimum Vmin (seuil de tension minimum) est appliquée sur l'entrée inverseuse du deuxième amplificateur opérationnel 42b. La tension de surveillance Vsur est appliquée sur l'entrée non inverseuse du deuxième amplificateur opérationnel 42b.

La sortie du premier amplificateur opérationnel 42a et la sortie du deuxième amplificateur opérationnel 42b sont connectées respectivement à une première entrée et à une deuxième entrée de la porte ET 40 du circuit logique.

La sortie de la porte ET 40 est appliquée sur l'entrée S de la bascule RS 41. L'entrée R de la bascule RS 41 est à la masse. La sortie Q de la bascule RS 41 produit une tension de détection Vd.

Le circuit de détection 37 comprend de plus une unité de traitement 44 qui est une unité électronique et logicielle. L'unité de traitement 44 comprend au moins un composant de traitement 45, qui est par exemple un processeur « généraliste », un processeur spécialisé dans le traitement du signal (ou DSP, pour *Digital Signal Processor*), un processeur spécialisé pour les algorithmes d'intelligence artificielle (de type NPU, pour *Neural Processing Unit*), un microcontrôleur, ou bien un circuit logique programmable tel qu'un FPGA (pour *Field Programmable Gate Arrays*) ou un ASIC (pour *Application Specific Integrated Circuit*)*.*

L'unité de traitement comprend aussi une ou des mémoires 46, reliées à ou intégrées dans le ou les composants de traitement 45. Au moins l'une de ces mémoires 46 forme un support d'enregistrement lisible par ordinateur, sur lequel est enregistré au moins un programme d'ordinateur comprenant des instructions qui conduisent l'unité de traitement 44 à exécuter les étapes du procédé de détection qui va être décrit.

On note que l'unité de traitement 44 n'est pas nécessairement dédiée uniquement à cette fonction de détection d'arc série.

Le premier comparateur formé par le premier amplificateur opérationnel 42a compare donc la tension de surveillance Vsur avec la tension d'arc maximum Vmax et le deuxième comparateur formé par le deuxième amplificateur opérationnel 42b compare donc la tension de surveillance Vsur avec la tension d'arc minimum Vmin.

La sortie du premier comparateur passe à l'étage logique « vrai » lorsque Vsur < Vmax. La sortie du deuxième comparateur passe à l'étage logique « vrai » lorsque Vsur > Vmin.

Ainsi, lorsque la tension de surveillance Vsur a une forme d'onde ne passant pas par zéro mais décalée de la tension d'arc série (par exemple 20Vdc), et lorsqu'elle atteint cette valeur, la sortie du premier comparateur et la sortie du deuxième comparateur passent simultanément à l'état « vrai », et donc la sortie de la porte ET 40 passe aussi à l'état « vrai » et commande alors la bascule RS 41 qui va mémoriser le défaut.

L'unité de traitement 44 acquiert et surveille en permanence la tension de détection Vd sur la sortie Q de la bascule RS 41. L'unité de traitement 44 détecte la survenue d'un arc électrique série à partir de cette tension de détection Vd.

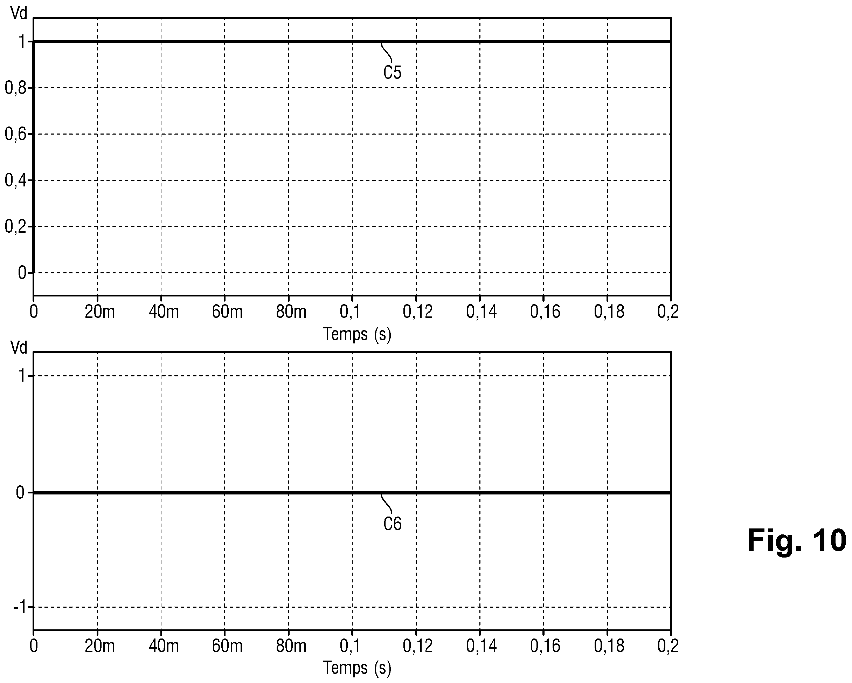

On voit sur le graphique de gauche de la figure 10 la courbe C5 de la tension de détection Vd en présence d'un arc électrique série, et on voit sur le graphique de droite la courbe C6 de la tension de détection Vd en l'absence d'un arc électrique série.

On peut donc constater que le circuit de surveillance 35 est très efficace pour détecter un arc électrique série et donc pour éviter tout emballement thermique ou départ de feu. Les composants du circuit de surveillance (petits signaux) sont des composants simples, peu nombreux et peu volumineux. L'ajout de masse est très réduit. La surveillance est robuste et exempte de fausses détections.

Le circuit de surveillance 35 peut être intégré dans un dispositif d'alimentation préexistant pour surveiller le convertisseur de puissance DC/AC et ce, sans modifier ledit convertisseur de puissance. Il suffit en effet de connecter le circuit de surveillance au convertisseur de puissance DC/AC, ce qui ne nécessite pas de requalifier le convertisseur DC/AC ni le reste du dispositif d'alimentation.

Bien entendu, l'invention n'est pas limitée aux modes de réalisation décrits mais englobe toute variante entrant dans le champ de l'invention tel que défini par les revendications.

Le dispositif d'alimentation n'est pas nécessairement intégré dans un aéronef. La charge alimentée par le dispositif d'alimentation n'est pas nécessairement un moteur électrique.

Le convertisseur de puissance DC/AC et le convertisseur AC/DC pourraient être des convertisseurs monophasés ou polyphasés avec un nombre de phases différent de trois.

Le convertisseur AC/DC pourrait utiliser une technologie différente, par exemple à base d'amplificateurs opérationnels.

## Revendications

1. Dispositif d'alimentation (23) agencé pour alimenter électriquement une charge (22) et comprenant :
- un convertisseur de puissance DC/AC (24) agencé pour produire au moins une tension alternative de sortie (Va) à partir d'une tension continue d'entrée (Ve), la au moins une tension alternative de sortie étant destinée à être appliquée entre des bornes de la charge ;
- un circuit de surveillance (35) comportant :
∘ un convertisseur AC/DC (36) agencé pour produire une tension de surveillance (Vsur) à partir de la au moins une tension alternative de sortie ;
∘ un circuit de détection (37) agencé pour détecter une survenue d'un arc électrique série dans le convertisseur de puissance DC/AC à partir de la tension de surveillance ;
la charge (22) étant une charge polyphasée, le convertisseur de puissance DC/AC (34) étant agencé pour produire plusieurs tensions alternatives de sortie (Vaa, Vab, Vac), qui sont appliquées en entrée du convertisseur AC/DC (36) du circuit de surveillance pour produire la tension de surveillance.

2. Dispositif d'alimentation selon la revendication 1, dans lequel la charge (22) est une charge triphasée, et le convertisseur de puissance DC/AC (24) et le convertisseur AC/DC (36) sont des convertisseurs triphasés.

3. Dispositif d'alimentation selon l'une des revendications précédentes, le convertisseur AC/DC (36) étant un redresseur double alternance.

4. Dispositif d'alimentation selon l'une des revendications précédentes, le circuit de détection (37) comportant :
- un premier comparateur (42a) agencé pour comparer la tension de surveillance (Vsur) avec un seuil de tension maximum (Vmax) ;
- un deuxième comparateur (42b) agencé pour comparer la tension de surveillance avec un seuil de tension minimum (Vmin) inférieur au seuil de tension maximum ;
- une porte ET (40) comprenant une première entrée reliée à une sortie du premier comparateur et une deuxième entrée reliée à une sortie du deuxième comparateur ;
- une bascule RS (41) comprenant une entrée reliée à une sortie de la porte « ET ».

5. Système électrique (21) comportant un dispositif d'alimentation (23) selon l'une des revendications précédentes et la charge (22) qui est alimentée par ledit dispositif d'alimentation.

6. Système électrique (21) selon la revendication 5, la charge étant un moteur électrique.

7. Système électrique (21) selon la revendication 6, le moteur électrique étant un moteur triphasé.

8. Système électrique (21) selon l'une des revendications 5 à 7, le système électrique étant un système de propulsion d'aéronef.

9. Aéronef (20), intégrant un système électrique selon la revendication 8.
